# EUROPEAN PATENT APPLICATION

(11) **EP 2 623 462 A1**
(43) Date of publication of application: **07.08.2013**
(21) Application number: 11828433.0
(22) Date of filing: 28.09.2011
(51) Int. Cl.: C02F 1/46, C02F 5/00, F24H 1/00, F24H 1/18

(54) **ELECTROLYSIS DEVICE AND HEAT-PUMP-TYPE WATER HEATER PROVIDED WITH SAME**

(30) Priority: 30.09.2010 JP 2010220944
(71) Applicant: Daikin Industries, Ltd., Osaka-shi, Osaka 530-8323 (JP)
(72) Inventor: SHIBATA, Yutaka, Sakai-shi Osaka 591-8511 (JP); YOSHIDA, Kaori, Sakai-shi Osaka 591-8511 (JP); FUJINAMI, Isao, Sakai-shi Osaka 591-8511 (JP)
(74) Representative: Goddar, Heinz J.
(86) International application number: PCT/JP2011/005464
(87) International publication number: WO 2012/042867

(57) **Abstract**

An electrolysis device 41 includes: a container 47 including a first flow port 43 functioning as one of an inlet and an outlet for water, and a second flow port 45 functioning as the other of the inlet and the outlet for water; a plurality of electrode pairs 49 disposed in the container 47; and a power supply 51 configured to apply a voltage to each of the electrode pairs 49. Each of the electrode pairs 49 includes a pair of electrode plates 53. A plurality of the electrode plates 53 are arrayed spaced apart from one another in the thickness direction of the electrode plate 53. In the electrolysis device 41, a water channel (F) is formed by the plurality of electrode plates 53 such that water flowing from the inlet into the container 47 reaches the outlet after passing between the pair of electrode plates 53 in each of the electrode pairs 49.

## Description

### Technical Field

The present invention relates to an electrolysis device for removing, in a water heater such as a heat-pump-type water heater, scale components in water, and to a heat-pump-type water heater provided with the electrolysis device.

### Background Art

In general, a heat-pump-type water heater includes a heat pump unit in which a compressor, a water heat exchanger, an expansion valve, and an air heat exchanger are connected by pipes in this order; and a hot water storage unit including a tank in which water is stored, an inflow water pipe for feeding the water in the tank to the water heat exchanger, and an outflow hot water pipe for returning the water heated by the water heat exchanger to the tank. In the heat-pump-type water heater, usually, a water supply source of the water stored in the tank is tap water, well water, or the like.

Incidentally, the tap water or the well water contains components such as calcium ion, magnesium ion, and the like that cause scale (hereinafter referred to as scale components). Therefore, in a water heater, scale of calcium salt, magnesium salt, and the like is precipitated. In particular, underground water such as the well water has high concentration of the scale components compared with the tap water and has water quality that tends to cause scale. In the water heat exchanger, since the temperature of the water is high, scale is more likely to be precipitated than in other regions. When scale is precipitated and deposited on the inner surface of a pipe of the water heat exchanger, a problem occurs in that, for example, the heat transfer performance of the water heat exchanger is deteriorated or a channel of the pipe is narrowed.

For example, Patent Document 1 proposes a cooling water circulating apparatus including an electrolysis device in which one electrode pair is set in an electrolytic cell. Patent Document 1 describes that, since scale components can be removed from cooling water through electrolysis, it is possible to reduce adhesion of scale in a circulating path.

However, in the electrolysis device disclosed in Patent Document 1, removal efficiency for scale components in water is not necessarily sufficient.

Patent Document 1: WO2006/027825

### Summary of the Invention

Therefore, the present invention has been devised in view of such a point and it is an object of the present invention to provide an electrolysis device that excels in removal efficiency for scale components and a heat-pump-type water heater provided with the electrolysis device.

The electrolysis device (41) according to the present invention is used in a water heater including a water heat exchanger (21) for heating water. The electrolysis device (41) includes a container (47), a plurality of electrode pairs (49), and a power supply (51). The container (47) includes a first flow port (43) functioning as one of an inlet and an outlet for water, and a second flow port (45) functioning as the other of the inlet and the outlet for water. The plurality of electrode pairs (49) are disposed in the container (47).' The power supply (51) applies a voltage to each of the electrode pairs (49). Each of the electrode pairs (49) includes a pair of electrode plates (53). A plurality of the electrode plates (53) are arrayed spaced apart from one another in the thickness direction of the electrode plate (53). In the electrolysis device (41), a water channel (F) is formed by the plurality of electrode plates (53) such that water flowing into the container (47) from the inlet reaches the outlet after passing between the pair of electrode plates (53) in each of the electrode pairs (49).

### Brief Description of the Drawings

Fig. 1 is a configuration diagram showing a heat-pump-type water heater according to an embodiment of the present invention.
Fig. 2A is a sectional view showing an electrolysis device according to a first embodiment of the present invention used in the heat-pump-type water heater and is a diagram of the electrolysis device viewed from a side. Fig. 2B is a plan view of the electrolysis device.
Fig. 3A is a schematic diagram showing the electrolysis device shown in Fig. 2. Figs. 3B to 3D are schematic diagrams respectively showing electrolysis devices according to modifications of the first embodiment.
Figs. 4A to 4D are schematic diagrams respectively showing electrolysis devices according to other modifications of the first embodiment.
Figs. 5A to 5D are schematic diagrams respectively showing electrolysis devices according to still other modifications of the first embodiment.
Fig. 6 is a sectional view showing an electrolysis device according to a second embodiment of the present invention.
Fig. 7A is a schematic diagram showing the electrolysis device shown in Fig. 6. Figs. 7B to 7D are schematic diagrams showing electrolysis devices according to modifications of the second embodiment.
Figs. 8A to 8H are schematic diagrams showing electrolysis devices according to other modifications of the second embodiment.
Figs. 9A to 9C are sectional views showing an electrolysis device according to still another modification of the second embodiment.
Fig. 10 is a sectional view showing a modification of the heat-pump-type water heater.
Figs. 11A and 11B are schematic diagrams showing modifications of the heat-pump-type water heater.
Fig. 12 is a schematic diagram showing a modification of the heat-pump-type water heater.
Figs. 13A and 13B are schematic diagrams showing modifications of the heat-pump-type water heater.

### Description of Embodiments

Embodiments of the present invention are explained in detail below with reference to the drawings.

### <Heat-pump-type water heater>

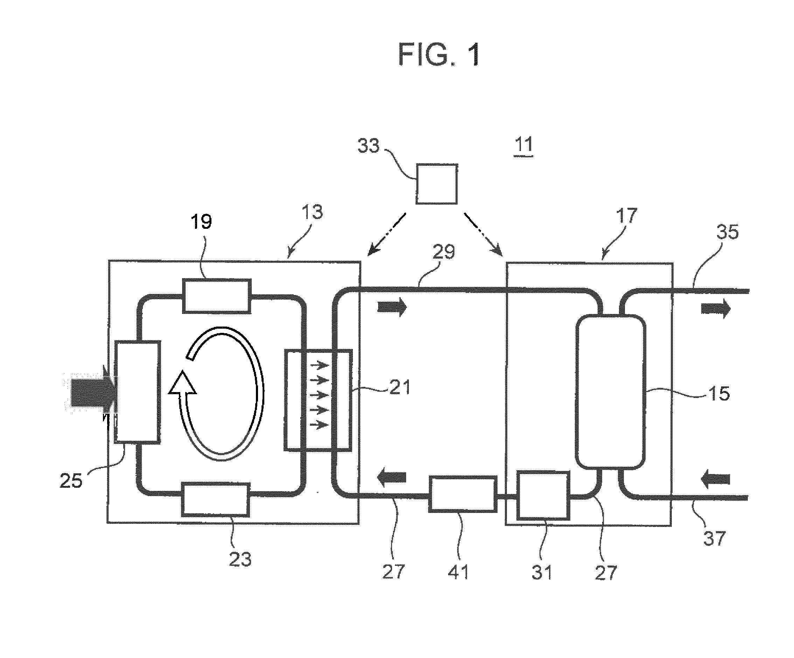

As shown in Fig. 1, a heat-pump-type water heater 11 of a first embodiment includes a heat pump unit 13 in which a refrigerant circulates, a hot water storage unit 17 that exchanges heat with the refrigerant in the heat pump unit 13 to heat up low-temperature water and stores high-temperature water in a tank 15, a water supply pipe 37, a hot water supply pipe 35, an electrolysis device 41, and a control unit 33.

The heat pump unit 13 includes a compressor 19, a water heat exchanger 21, an electric expansion valve 23, an air heat exchanger 25, and pipes that connect the foregoing. In this embodiment, carbon dioxide is used as the refrigerant circulating in the heat pump unit 13. The refrigerant exchanges, in the water heat exchanger 21, heat with the water circulating in the hot water storage unit 17 to heat the water and exchanges, in the air heat exchanger 25, heat with the outside air to absorb heat from the outside air.

The hot water storage unit 17 includes the tank 15 in which water is stored, an inflow water pipe 27 for feeding the water in the tank 15 to the water heat exchanger 21, and an outflow hot water pipe 29 for returning the water heated by heat exchange with the water heat exchanger 21 to the tank 15. A pump 31 is provided in the inflow water pipe 27. The pump 31 feeds the water flowing into the inflow water pipe 27 from a lower part of the tank 15 to the water heat exchanger 21 and further feeds the water to an upper part of the tank 15 through the outflow hot water pipe 29.

The electrolysis device 41 is provided in the inflow water pipe 27 and located between the pump 31 and the water heat exchanger 21. Details of the electrolysis device 41 are explained below.

The hot water supply pipe 35 is connected to the upper part of the tank 15. The hot water supply pipe 35 is a pipe for extracting high-temperature water stored in the tank 15 and supplying the high-temperature water to a bathtub or the like. The water supply pipe 37 is connected to the bottom of the tank 15. The water supply pipe 37 is a pipe for supplying low-temperature water into the tank 15 from a water supply source. As the water supply source for supplying water to the tank 15, for example, tap water or underground water such as well water can be used.

The control unit 33 is configured by, for example, a central processing unit (CPU), a memory in which data such as a program is stored, and a memory for storing data during program execution, various setting values, measured data, and the like. The control unit 33 controls the heat pump unit 13 and the hot water storage unit 17 on the basis of temperature data and the like measured by not-shown temperature sensors provided in the tank 15, the water heat exchanger 21, the pipes, and the like.

The operation of the water heater 11 is explained. In a heat-up operation for heating up water in the tank 15, the control unit 33 drives the compressor 19 of the heat pump unit 13, adjusts an opening degree of the electric expansion valve 23, and drives the pump 31 of the hot water storage unit 17. Consequently, as shown in Fig. 1, low-temperature water in the tank 15 is fed from an outflow water port provide in the bottom of the tank 15 to the water heat exchanger 21 through the inflow water pipe 27 and heated in the water heat exchanger 21. Heated high-temperature water is returned into the tank 15 from an inflow water port provided in the upper part of the tank 15 through the outflow hot water pipe 29. Consequently, the high-temperature water is stored in the tank 15 from the top of the tank 15 in order.

The heat-pump-type water heater 11 according to this embodiment is of one-through type water heater. In the one-through type water heater 11, water (hot water) supplied from the hot water supply pipe 35 is used by a user and is not returned to the tank 15. Therefore, water of substantially the same amount as an amount of water supplied from the tank 15 through the hot water supply pipe 35 is supplied from the water supply source to the tank 15 through the water supply pipe 37. That is, water containing scale components is frequently supplied to the tank 15 from the water supply source such as the tap water or the well water. An amount of the supplied water is large. Therefore, in the case of the one-through heat-pump-type water heater, it is necessary to efficiently remove the scale components compare with the cooling water circulating apparatus of a circulation type and a water heater of a circulation type.

### <Electrolysis device>

### (First Embodiment)

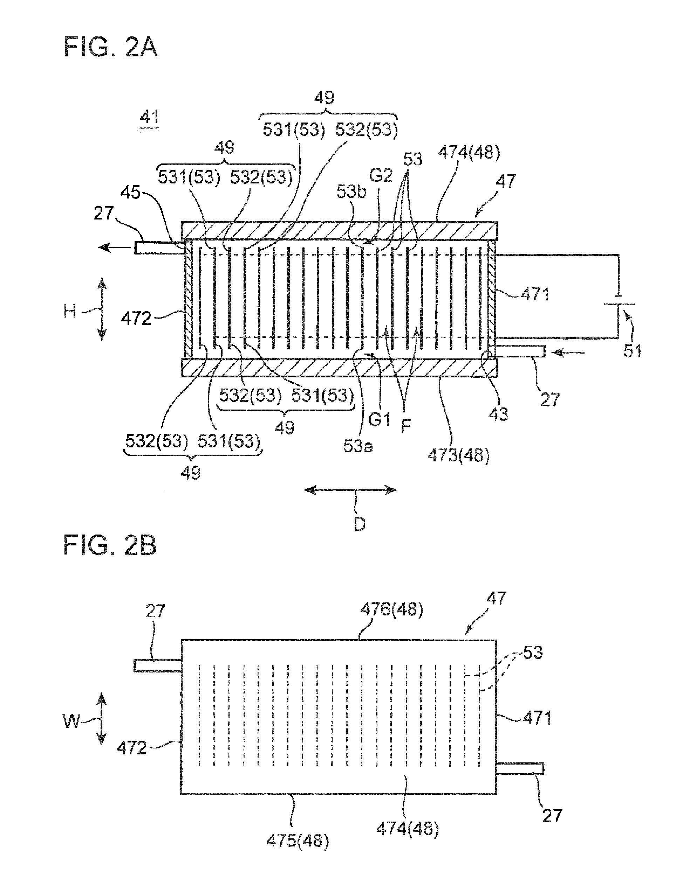

Fig. 2A is a sectional view showing the electrolysis device 41 according to a first embodiment of the present invention used in the water heater 11. Fig. 2A is a diagram of the electrolysis device 41 viewed from a side. Fig. 2B is a plan view of the electrolysis device 41. As shown in Figs. 2A and 2B, the electrolysis device 41 according to the first embodiment includes a container 47, a plurality of electrode pairs 49, and power supplies 51.

As shown in Figs. 2A and 2B, the container 47 has a substantially rectangular parallelepiped shape. The container 47 includes a first wall 471 located on an upstream side of a flow of water, and a second wall 472 located on a downstream side and a sidewall 48 that connects the walls 471 and 472. The first wall 471 and the second wall 472 are opposed to each other across a plurality of electrode plates 53 explained below in a direction in which the sidewall 48 extends (an array direction D of the plurality of electrode plates 53).

The sidewall 48 includes a third wall 473 and a fourth wall 474 shown in Fig. 2A and a fifth wall 475 and a sixth wall 476 shown in Fig. 2B. The electrolysis device 41 according to this embodiment is used while being arranged in a posture shown in Fig. 2A such that, for example, the third wall 473 is located below and the fourth wall 474 is located above. The third wall 473 and the fourth wall 474 are opposed to each other in a height direction H (the up down direction) across the plurality of electrode plates 53. Similarly, the fifth wall 475 and the sixth wall 476 are opposed to each other in a width direction W (the horizontal direction perpendicular to the array direction D) across the plurality of electrode plates 53.

The first wall 471 includes a first flow port 43 functioning as an outlet and inlet for water. The second wall 472 includes a second flow port 45 functioning as an outlet and inlet for water. In this embodiment, the first flow port 43 functions as an inlet and the second flow port 45 functions as an outlet. Inflow water pipes 27 are respectively connected to the first flow port 43 and the second flow port 45.

The first flow port 43 is provided in the first wall 471 in a position closer to the third wall 473 than the fourth wall 474 and closer to the fifth wall 475 than the sixth wall 476. The second flow port 45 is provided in the second wall 472 in a position closer to the fourth wall 474 than the third wall 473 and closer to the sixth wall 476 than the fifth wall 475. Specifically, the first flow port 43 and the second flow port 45 are respectively provided in the vicinities of opposite angles in the container 47 having a rectangular parallelepiped shape.

The container 47 has an elongated shape. A distance between the outer surface of the first wall 471 and the outer surface of the second wall 472 is larger than a distance between the outer surface of the third wall 473 and the outer surface of the fourth wall 474 and a distance between the outer surface of the fifth wall 475 and the outer surface of the sixth wall 476.

Each of the electrode pairs 49 is configured by a pair of electrode plates 53 (a first electrode plate 531 and a second electrode plate 532). The plurality of electrode plates 53 configuring the plurality of electrode pairs 49 are arranged in the container 47. The plurality of electrode plates 53 are arrayed spaced apart from one another in the thickness direction of the electrode plates 53. Each of the electrode plates 53 is arranged in a posture extending in a direction substantially perpendicular to the array direction D. The array direction D generally coincides with the direction in which the sidewall 48 extends (the longitudinal direction of the container 47). A space between the electrode plates 53 of each of the electrode pairs 49 is substantially the same. A gap between the electrode plates 53 in each of the electrode pairs 49 functions as a channel (a water channel) F through which water flows.

Each of the electrode plates 53 has a substantially rectangular shape. Examples of the material of the electrode plate 53 include titanium, platinum, nickel, carbon, graphite, copper, and vitreous carbon.

The plurality of electrode plates 53 include a plurality of first electrode plates 531 connected to positive poles of the power supplies 51 and a plurality of second electrode plates 532 connected to negative poles of the power supplies 51. In this embodiment, the first electrode plates 53 function as anodes and the second electrode plates 532 function as cathodes. The first electrode plates 531 and the second electrode plates 532 are alternately arranged along the array direction D of the plurality of electrode plates 53. Each of the electrode plates 53 is insulated from the electrode plate 53 of opposite pole, and is fixed to the side wall 48 by, for example, a supporting member which is not shown.

For example, in Fig. 2A, the second electrode plate 532 at the left end and the first electrode plate 531 second from the left configure one electrode pair 49. The first electrode plate 531 second from the left and the second electrode plate 532 third from the left configure one electrode pair 49. Similarly, the electrode plates 53 adjacent to each other configure one electrode pair 49.

A gap G1 through which water can pass is provided between one end portion 53a in the height direction H in each of the electrode plates 53 and the inner surface of the third wall 473. A gap G2 through which water can pass is provided between the other end portion 53b in the height direction H in each of the electrode plates 53 and the inner surface of the fourth wall 474. Gaps between each of the electrode plates 53 and inner surface of the side wall 48 may be only the gap G1 and the gap G2. However, gaps may be further provided between the end portion of each of the electrode plates 53 and the inner surface of the fifth wall 475 and between the end portion of each of the electrode plates 53 and the inner surface of the sixth wall 476.

In the electrolysis device 41 having the structure explained above, water flowing into the container 47 from the first flow port 43 flows out to the outside of the container 47 from the second flow port 45 roughly through a path explained below. That is, the water flowing into the container 47 flows to the second wall 472 side along the third wall 473 through the gap G1 between the one end portion 53a of each of the electrode plates 53 and the inner surface of the third wall 473. A part of the water flowing along the third wall 473 flows into a gap (the water channel F) between the electrode plates 53 of each of the electrode pairs 49, which are arranged in the array direction D, in order from the water channel F on the upstream side. The water flowing along the electrode plates 53 through the water channel F of each of the electrode pairs 49 merges on the fourth wall 474 side, flows to the second wall 472 side along the fourth wall 474, and flows out to the outside of the container 47 from the second flow port 45.

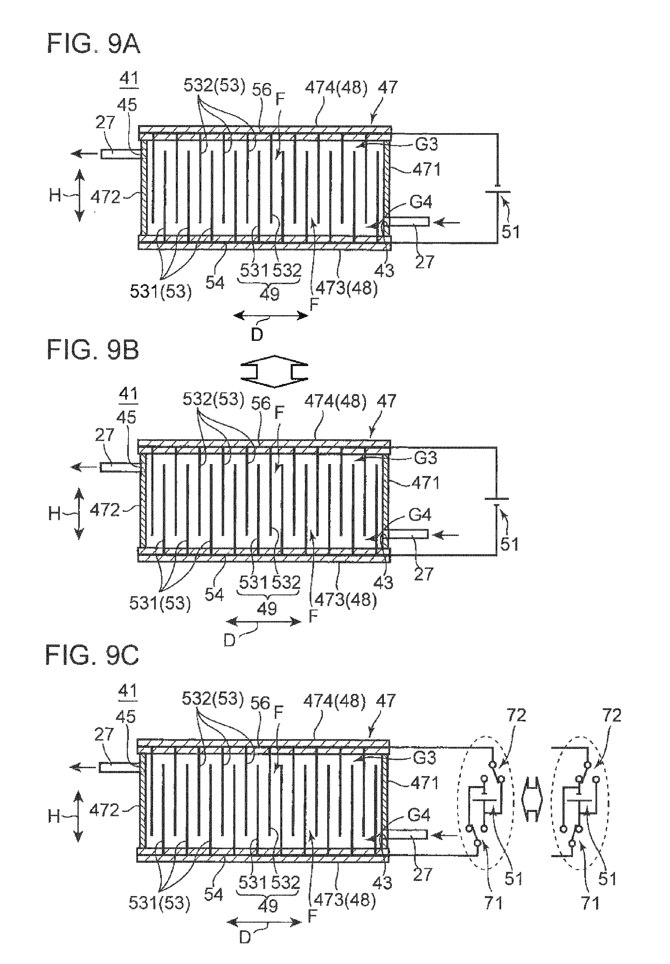

Until the water flowing into the container 47 from the first flow port 43 flows out to the outside of the container 47 from the second flow port 45, scale is precipitated by the electrolysis on the second electrode plate 532, which is the cathode. The scale adhering to the second electrode plate 532 is removed from the inside of the electrolysis device 41 by, for example, periodically cleaning the second electrode plate 532. Further, as will be described later in modifications of a second embodiment shown in Figs. 9A and 9B, the scale adhering to the cathode can be removed from the cathode by, for example, periodically inverting the polarity of the electrode plate 53.

In the cathode during the electrolysis, a reaction occurs in which hydrogen ions and electrons react with each other to generate hydrogen (2H⁺+2e⁻→H₂) and pH around the cathode rises. On the other hand, in the anode during the electrolysis, a reaction occurs in which water and oxygen are generated from hydroxide ions (40H⁻→2H₂O+O₂+4e⁻) and pH around the anode falls.

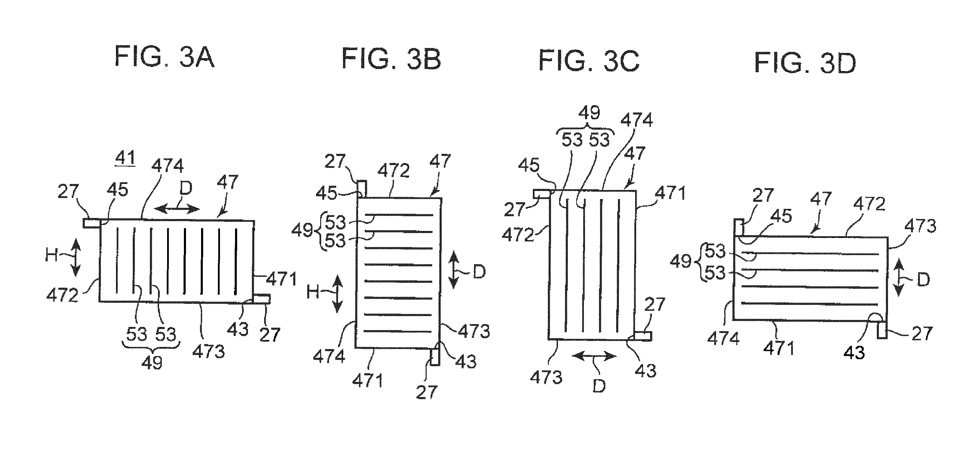

Fig. 3A is a schematic diagram showing the electrolysis device shown in Fig. 2. Figs. 3B to 3D, Figs. 4A to 4D, and Figs. 5A to 5D are schematic diagrams showing the electrolysis devices 41 according to modifications of the first embodiment. These figures show cross sections of the electrolysis devices 41 viewed from a side. In the electrolysis devices 41, illustration of the power supply 51 is omitted. The electrolysis device 41 shown in Fig. 3A has structure same as the structure of the electrolysis device 41 shown in Fig. 2 explained above. Therefore, explanation of the electrolysis device 41 is omitted. Concerning the other modifications, main components are generally explained below.

The electrolysis device 41 shown in Fig. 3B is the same as the electrolysis device 41 shown in Fig. 3A in basic structure and different from the electrolysis device 41 shown in Fig. 3A in a direction of the device during use. In the electrolysis device 41, both of the array direction D of the electrode plates 53 and the longitudinal direction of the container 47 face the up down direction (the height direction H). In the electrolysis device 41 shown in Fig. 3C, the array direction D of the electrode plates 53 faces the horizontal direction and the longitudinal direction of the container 47 faces the up down direction. In the electrolysis device 41 shown in Fig. 3D, the array direction D of the electrode plates 53 faces the up down direction and the longitudinal direction of the container 47 faces the horizontal direction.

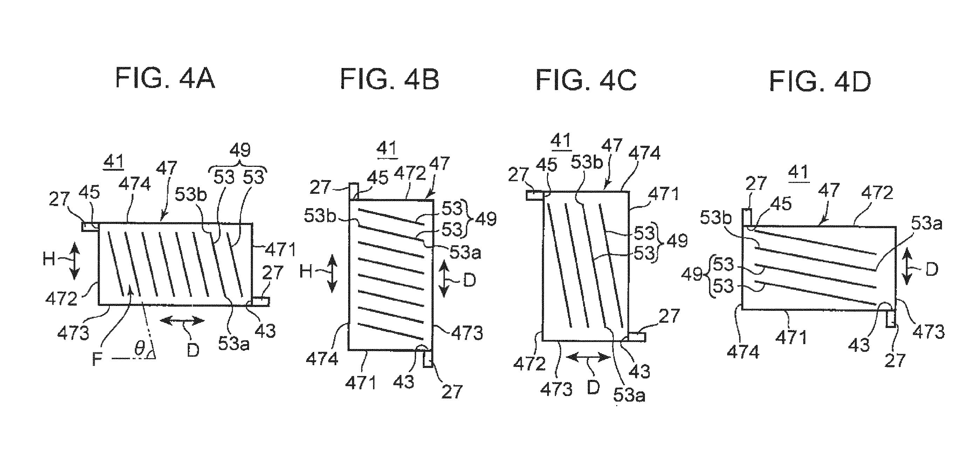

The electrolysis devices 41 shown in Figs. 4A to 4D are respectively similar to the electrolysis devices 41 shown in Figs. 3A to 3D and are different from the electrolysis devices 41 shown in Figs. 3A to 3D in that the plurality of electrode plates 53 incline as explained below.

In each of the electrolysis devices 41 shown in Figs. 4A to 4D, each of the electrode plates 53 is arranged to incline such that the one end portion 53a is located on one side in the array direction D (the first wall 471 side in the array direction D) than the other end portion 53b. For example, in the modification shown in Fig. 3A, each of the electrode plates 53 is arranged in a direction substantially parallel to the height direction H of the container 47. However, in the modification shown in Fig. 4A, each of the electrode plates 53 is arranged to incline with respect to the height direction H.

Since each of the electrode plates 53 is arranged to incline as explained above, the water channel F formed by the plurality of electrode plates 53 also inclines in a direction substantially the same as the inclining direction of the electrode plate 53.

A flow of water in these modifications is generally as explained below with reference to, as an example, the electrolysis device 41 shown in Fig. 4A. That is, an inflow direction of the water flowing from the one end portion 53a side of the electrode plate 53 into the water channel F inclines to form an acute angle (an angle 8 in Fig. 4A) with a direction in which the water flowing into the container 47 from the first flow port 43 flows to the second wall 472 side along the third wall 473.

Therefore, in the modifications shown in Figs. 4A to 4D, the water flowing to the second wall 472 side along the third wall 473 easily flows into the water channel F of each of the electrode pairs 49 compared with the modifications shown in Figs. 3A to 3D. Moreover, the water flowing along the electrode plate 53 through the water channel F of each of the electrode pairs 49 smoothly merges with the water flowing through another water channel F on the fourth wall 474 side.

In the modifications shown in Figs. 4A to 4D, since each of the electrode plates 53 is arranged to incline, compared with the modifications shown in Figs. 3A to 3D, the area of each of the electrode plates 53 can be increased even if the size of the container 47 is the same.

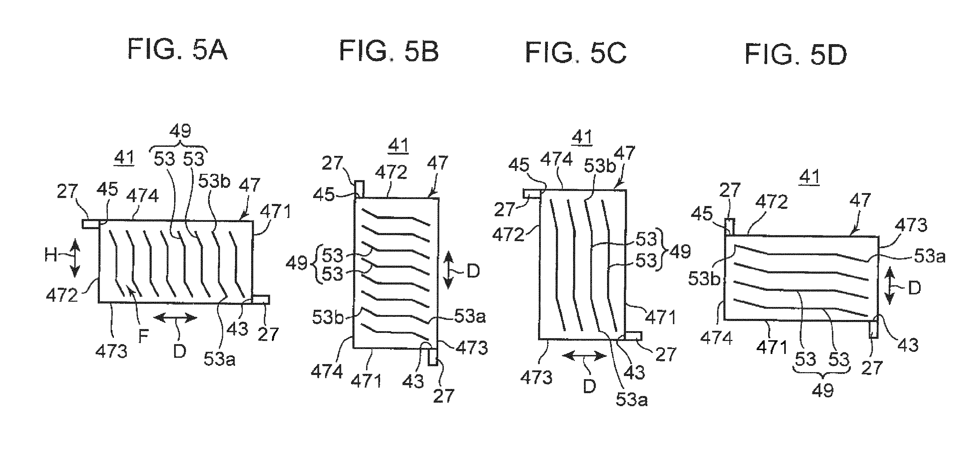

The electrolysis devices 41 shown in Figs. 5A to 5D are respectively similar in structure to the modifications shown in Figs. 4A to 4D in that a plurality of electrode plates incline but are different in structure from the modifications shown in Figs. 4A to 4D in points explained below.

In the electrolysis devices 41 shown in Figs. 5A to 5D, a region on the one end portion 53a side and a region on the other end portion 53b side of each of the electrode plates 53 incline in a direction same as the inclining direction of each of the electrode plates 53 in the modifications shown in Figs. 4A to 4D. A region between the region on the one end portion 53a side and the region on the other end portion 53b side is substantially perpendicular to the array direction D. In other words, in the electrolysis devices 41 shown in Figs. 5A to 5D, each of the electrode plates 53 includes a non-inclining region substantially parallel to the height direction H of the container 47, a region on the one end portion 53a side than the non-inclining region, and a region on the other end 53b side than the non-inclining region.

Therefore, in the modifications shown in Figs. 5A to 5D, compared with the modifications shown in Figs. 3A to 3D, the easiness of inflow into the water channel F of each of the electrode pair 49 and the smoothness during merging are improved and the area of each of the electrode plates 53 can be increased.

### (Second Embodiment)

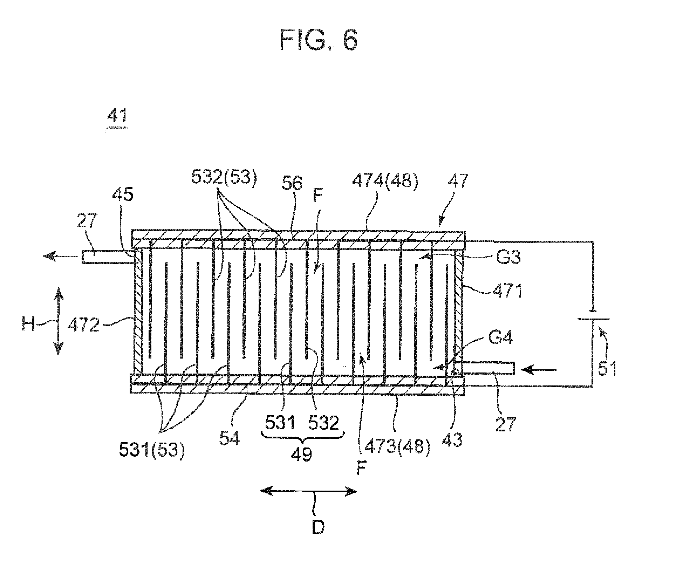

Fig. 6 is a sectional view showing the electrolysis device 41 according to a second embodiment of the present invention. Fig. 6 is a diagram of the electrolysis device 41 viewed in the horizontal direction. As shown in Fig. 6, in the second embodiment, the configuration of each of the electrode plates 53 is different from the configuration in the first embodiment. Components same as the components in the first embodiment are denoted by reference numerals and signs same as the reference numerals and signs in the first embodiment and detailed explanation of the components is omitted.

In the electrolysis device 41, the plurality of first electrode plates 531 are respectively extended from the proximal end portions located in the third wall 473 toward the fourth wall 474. The proximal end of each of the first electrode plates 531 is coupled to the coupling plate 54 (or the coupling wire 54) extended in the direction substantially parallel to the third wall 473. An end portion of the coupling plate 54 is connected to the positive pole of the power supply 51. The coupling plate 54 is embedded in the third wall 473. A gap G3 through which water can pass is provided between the distal end portion (the end portion on the fourth wall 474 side) of each of the first electrode plates 531 and the inner surface of the fourth wall 474.

The plurality of second electrode plates 532 are respectively extended from the proximal end portions located in the fourth wall 474 toward the third wall 473. The proximal end portion of each of the second electrode plates 532 is coupled to the coupling plate 56 (or the coupling wire 56) extended in the direction substantially parallel to the fourth wall 474. An end portion of the coupling plate 56 is connected to the negative pole of the power supply 51. The coupling plate 56 is embedded in the fourth wall 474. A gap G4 through which water can pass is provided between the distal end portion (the end portion on the third wall 473 side) of each of the second electrode plates 532 and the inner surface of the third wall 473.

A sectional shape shown in Fig. 6 of the plurality of first electrode plates 531 and the coupling plate 54 to which the plurality of first electrode plates 531 are coupled is a comb shape. Similarly, a sectional shape shown in Fig. 6 of the plurality of second electrode plates 532 and the coupling plate 56 to which the plurality of second electrode plates 532 are coupled is a comb shape. The first electrode plates 531 and the second electrode plates 532 are alternately arranged along the array direction D. In the electrolysis device 41 according to the second embodiment having the structure explained above, as shown in Fig. 6, the water channel F has a path that meanders up and down.

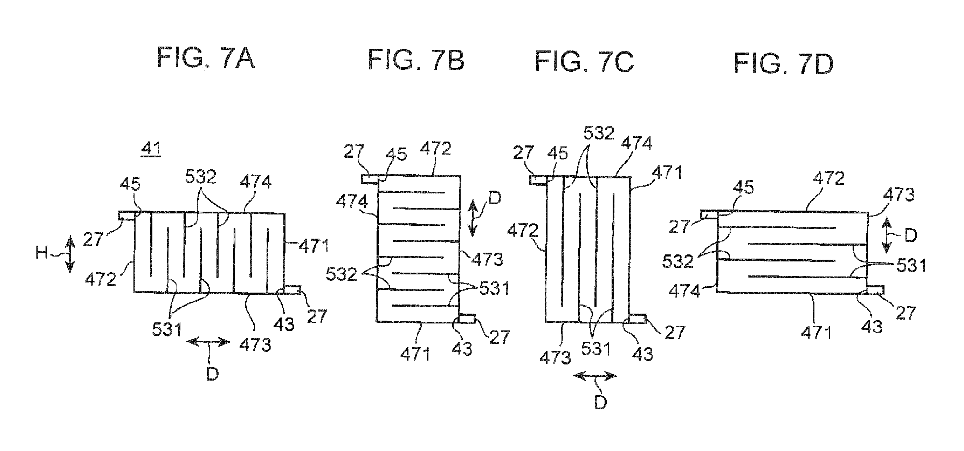

Fig. 7A is a schematic diagram showing the electrolysis device 41 shown in Fig. 6. Figs. 7B to 7D are schematic diagrams showing the electrolysis devices 41 according to modifications of the second embodiment. These figures show cross sections of the electrolysis devices 41 viewed from a side.

The electrolysis device 41 shown in Fig. 7A has structure same as the structure of the electrolysis device 41 shown in Fig. 6. In the electrolysis device 41, water flowing from the first flow port 43 into the container 47 flows in the container 47 sideward while meandering up and down.

In the electrolysis device 41 shown in Fig. 7B, both the array direction D of the electrode plates 53 and the longitudinal direction of the container 47 face the up down direction. In the electrolysis device 41, the first flow port 43 is provided in the third wall 473 and located at a corner portion where the first wall 471 and the third wall 473 cross or in the vicinity of the corner portion. The second flow port 45 is provided in the fourth wall 474 and located at a corner portion where the second wall 472 and the fourth wall 474 cross or in the vicinity of the corner portion. In the electrolysis device 41, water flowing from the first flow port 43 into the container 47 flows in the container 47 upward while meandering to the left and right. The second flow port 45 may be an inlet and the first flow port 45 may be an outlet.

In the electrolysis device 41 shown in Fig. 7C, the array direction D of the electrode plates 53 faces the horizontal direction and the longitudinal direction of the container 47 faces the up down direction. A flow of water is the same as the flow of water in the electrolysis device 41 shown in Fig. 7A.

In the electrolysis device 41 shown in Fig. 7D, the array direction D of the electrode plates 53 faces the up down direction and the longitudinal direction of the container 47 faces the horizontal direction. In the electrolysis device 41, the first flow port 43 is provided in the third wall 473 and located at a corner portion where the first wall 471 and the third wall 473 cross or in the vicinity of the corner portion. The second flow port 45 is provided in the fourth wall 474 and located at a corner portion where the second wall 472 and the fourth wall 474 cross or in the vicinity of the corner portion. A flow of water is the same as the flow of water in the electrolysis device 41 shown in Fig. 7B.

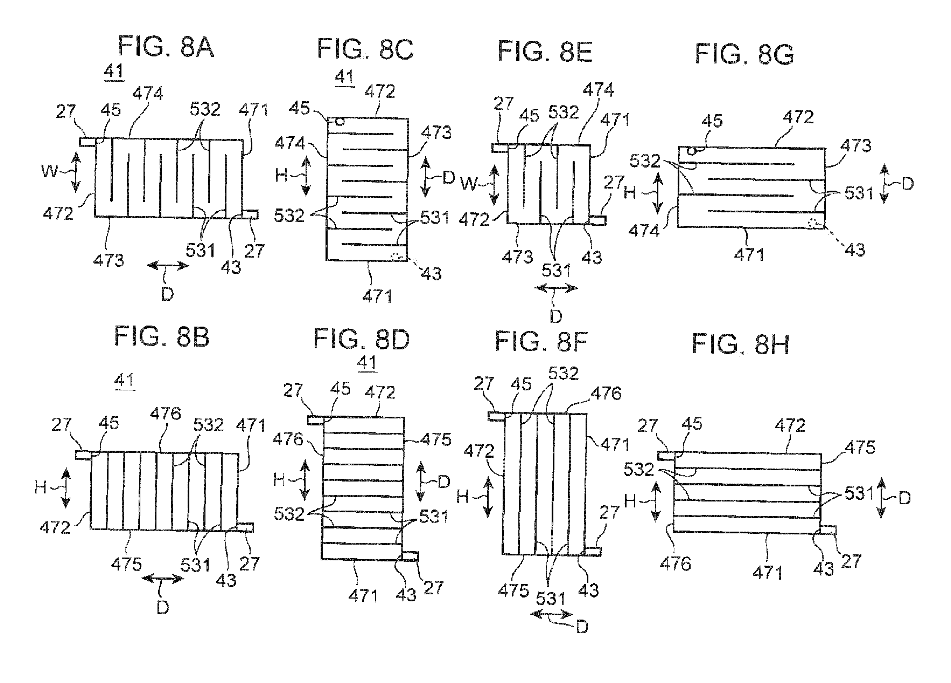

Figs. 8A and 8B are schematic diagrams showing electrolysis devices according to still other modifications of the second embodiment. Fig. 8A shows a cross section of the electrolysis device 41 viewed from above. Fig. 8B shows a cross section of the electrolysis device 41 viewed from a side. In the electrolysis device 41, both of the array direction D of the electrode plates 53 and the longitudinal direction of the container 47 face the horizontal direction. In the electrolysis device 41, water flowing from the first flow port 43 into the container 47 flows in the container 47 sideward while meandering to the left and right.

Figs. 8C and 8D are schematic diagrams showing electrolysis devices according to still other modifications of the second embodiment. Fig. 8C shows a cross section of the electrolysis device 41 viewed from the downstream side. Fig. 8D shows a cross section of the electrolysis device 41 viewed from a side. In the electrolysis device 41, both of the array direction D of the electrode plates 53 and the longitudinal direction of the container 47 face the up down direction. In the electrolysis device 41, water flowing from the first flow port 43 into the container 47 flows in the container 47 upward while meandering to the left and right.

Figs. 8E and 8F are schematic diagrams showing electrolysis devices according to still other modifications of the second embodiment. Fig. 8E shows a cross section of the electrolysis device 41 viewed from above. Fig. 8F shows a cross section of the electrolysis device 41 viewed from a side. In the electrolysis device 41, the array direction D of the electrode plates 53 faces the horizontal direction and the longitudinal direction of the container 47 faces the up down direction. In the electrolysis device 41, water flowing from the first flow port 43 into the container 47 flows in the container 47 sideward while meandering to the left and right.

Figs. 8G and 8H are schematic diagrams showing electrolysis devices according to still other modifications of the second embodiment. Fig. 8G shows a cross section of the electrolysis device 41 viewed from the downstream side. Fig. 8H shows a cross section of the electrolysis device 41 viewed from a side. In the electrolysis device 41, the array direction D of the electrode plates 53 faces the up down direction and the longitudinal direction of the container 47 faces the horizontal direction. In the electrolysis device 41, water flowing from the first flow port 43 into the container 47 flows in the container 47 upward while meandering to the left and right.

Figs. 9A and 9B are sectional views showing an electrolysis device according to still another modification of the second embodiment. In the electrolysis device 41, components same as the components of the electrolysis device 41 shown in Fig. 6 are denoted by the same reference numerals and signs and explanation of the components is omitted. The electrolysis device 41 according to this modification includes an inverting mechanism for inverting the polarity of the electrode plate 53.

In a state shown in Fig. 9A, the plurality of first electrode plates 531 is coupled to the positive pole of the power supply 51 via the coupling plate 54. The plurality of second electrode plate 532 is coupled to the negative pole of the power supply 51 via the coupling plate 56. In a state shown in Fig. 9B, the polarity of the electrode plate 53 is inverted by the inverting mechanism. That is, the plurality of the first electrode plates 531 is coupled to the negative pole of the power supply 51 via the coupling plate 54. The plurality of second electrode plate 532 is coupled to the positive pole of the power supply 51 via the coupling plate 56. For example, it is possible to invert the polarity of the electrode plate 53 by switching a contact of a contact switching section 71 and a contact of a contact switching section 72 like an inverting mechanism shown in Fig. 9C.

In this modification, the polarity of the electrode plate 53 is inverted on the basis of a predetermined period or a predetermined condition such as water quality or temperature explained below. In the electrolysis device 41, scale adheres to the cathode because of electrolysis. However, when the polarity of the electrode plate 53 is inverted to change the electrode plate 53 from the cathode to the anode, pH of liquid locally decreases in the vicinity of the electrode plate 53. Consequently, a part of the scale on the surface of the electrode plate 53 melts and drops from the electrode plate 53. Such inverting operation is repeated at the predetermined period or under the predetermined condition, whereby it is possible to suppress the adhesion of scale to the electrode plate 53.

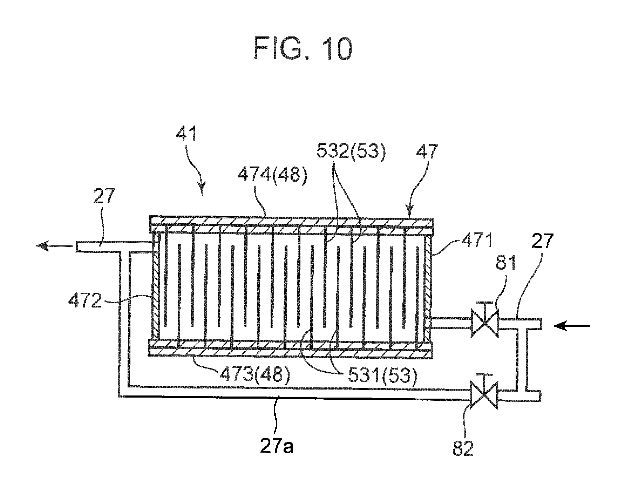

Fig. 10 is a sectional view showing a modification of the heat-pump-type water heater 11. The water heater 11 according to this modification further includes a bypass pipe 27a for bypassing the electrolysis device 41. The bypass pipe 27a couples the inflow water pipe 27 located on the upstream side than the electrolysis device 41 and the inflow water pipe 27 located on the downstream side than the electrolysis device 41. For example, as shown in Fig. 10, a valve 81 is attached to the inflow water pipe 27 located on the upstream side than the electrolysis device 41 and a valve 82 is attached to the bypass pipe 27a as well. The valve 81 is provided in the inflow water pipe 27 on the downstream side than a branching place of the bypass pipe 27a.

In the electrolysis device 41, when electrolysis is performed, the valve 81 is opened and the valve 82 is closed. On the other hand, in the electrolysis device 41, when electrolysis is not performed, the valve 81 is closed and the valve 82 is opened. Consequently, when electrolysis is not performed, water can be fed through the bypass pipe 27a in which the resistance of a flow of the water is small. Therefore, it is possible to reduce the power of the pump 31. Since the water is fed to the electrolysis device 41 only when electrolysis is performed, it is possible to suppress wear (abrasion) of the electrode plate 53.

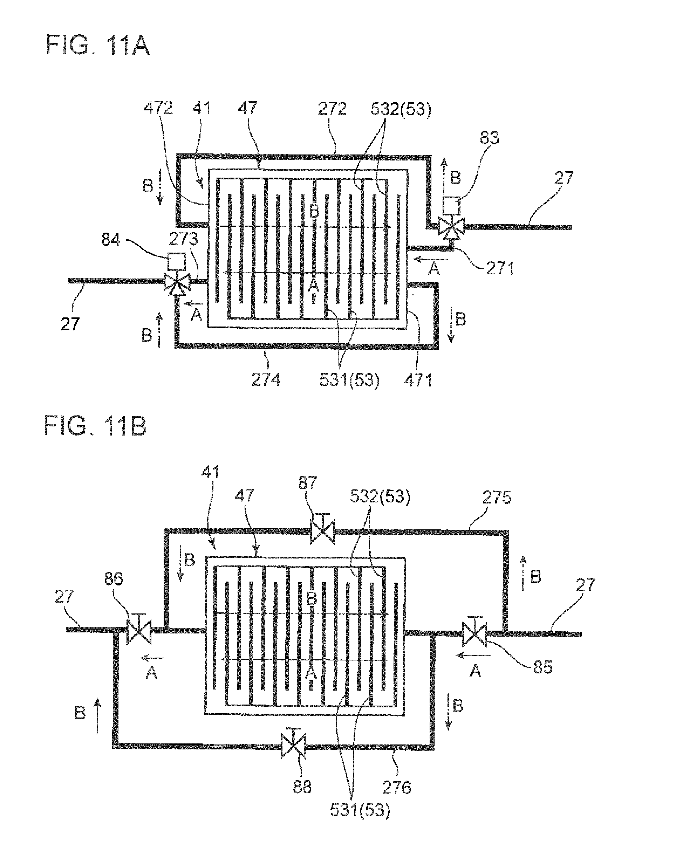

Figs. 11A and 11B are schematic diagrams showing other modifications of the heat-pump-type water heater 11. These water heaters 11 include a mechanism for reversing the inlet and the outlet in the electrolysis device 41.

First, in the heat-pump-type water heater 11 shown in Fig. 11A, the inflow water pipe 27 located on the upstream side than the electrolysis device 41 is connected to, for example, a three-way valve 83. A branch pipe 271 and a branch pipe 272 branch from the three-way valve 83. The branch pipe 271 is connected to the first wall 471 of the container 47. The branch pipe 272 is connected to the second wall 472. The inflow water pipe 27 located on the downstream side than the electrolysis device 41 is connected to, for example, a three-way valve 84. A branch pipe 273 and a branch pipe 274 branch from the three-way valve 84. The branch pipe 273 is connected to the second wall 472. The branch pipe 274 is connected to the first wall 471.

In the heat-pump-type water heater 11, when water is fed in a direction of a solid line arrow A in the container 47, the three-way valve 83 and the three-way valve 84 are switched to pass the water through the branch pipe 271 and the branch pipe 273. On the other hand, when water is fed in a direction of an arrow B of an alternate long and two short dashes line in the container 47, the three-way valve 83 and the three-way valve 84 are switched to pass the water through the branch pipe 272 and the branch pipe 274. Consequently, in the container 47, it is possible to reduce a concentration difference of scale components (a difference in the electrical conductivity of water) that occurs between a region on the inlet side and a region on the outlet side. Such switching operation is performed on the basis of a predetermined period or a predetermined condition such as water quality or temperature.

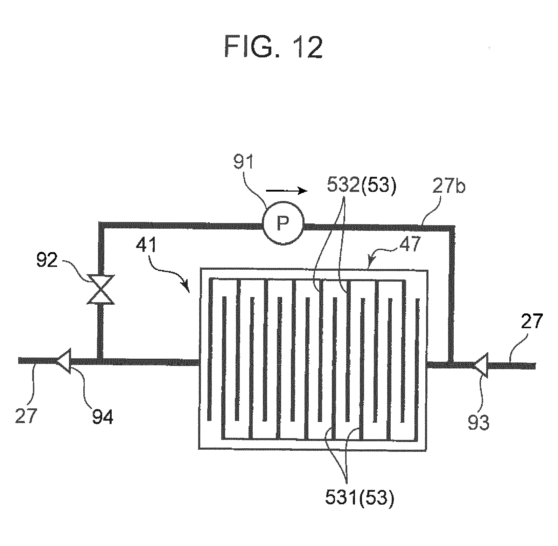

Fig. 12 is a schematic configuration diagram showing still another modification of the heat-pump-type water heater 11. The water heater 11 according to this modification further includes a re-inflow pipe 27b for returning water having passed through the electrolysis device 41 to the upstream side of the electrolysis device 41 and causing the water to flow into the electrolysis device 41 again. The re-inflow pipe 27b couples the inflow water pipe 27 located on the upstream side than the electrolysis device 41 and the inflow pipe 27 located on the downstream side than the electrolysis device 41.

In the re-inflow pipe 27b, an open-closable valve 92 and a pump 91 are provided. The pump 91 plays a role for feeding a part of water, which flows through the inflow pipe 27 on the downstream side, in a direction of an arrow in Fig. 12 through the re-inflow pipe 27b and causing the water to merge with the inflow pipe 27 on the upstream side.

In the inflow water pipe 27 located on the upstream side than the electrolysis device 41, a check valve 93 is provided in a position on the upstream side than a connecting place to the re-inflow pipe 27b. In the inflow water pipe 27 located on the downstream side than the electrolysis device 41, a check valve 94 is provided in a position on the downstream side than the connecting place to the re-inflow pipe 27b.

In normal operation of the electrolysis device 41, the valve 92 is closed and the pump 91 is stopped. On the other hand, when it is desired to improve the efficiency of electrolysis in the electrolysis device 41 to be higher than the efficiency during the normal operation, the valve 92 is opened and the pump 91 is driven. When the pump 91 is driven, a part of water flowing out from the electrolysis device 41 flows into the inflow water pipe 27 on the upstream side of the electrolysis device 41 again through the re-inflow pipe 27b, merges with water flowing through the inflow water pipe 27, and flows into the electrolysis device 41.

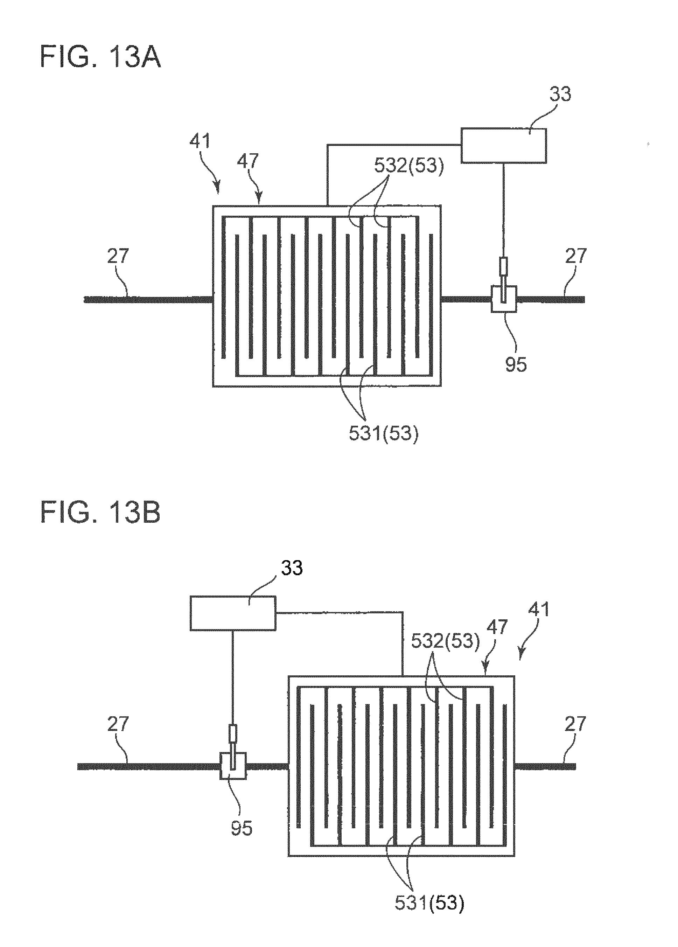

Figs. 13A and 13B are schematic diagrams showing other modifications of the heat-pump-type water heater 11. The water heaters 11 according to the modifications further include a sensor 95. In the water heater 11 shown in Fig. 13A, the sensor 95 is attached to the inflow water pipe 27 located on the upstream side than the electrolysis device 41. In the water heater 11 shown in Fig. 13B, the sensor 95 is attached to the inflow water pipe 27 located on the downstream side than the electrolysis device 41.

Examples of the sensor 95 include a water quality measurement sensor and a temperature sensor. When the sensor 95 is the water quality measurement sensor, the hardness of water is detected by measuring, for example, the electrical conductivity of the water with the sensor 95.

The control unit 33 controls the power supply 51 to adjust a voltage applied to each of the electrode pairs 49 according to the quality of water flowing through the inflow water pipe 27. Specifically, in the case of the quality of water that has high hardness and tends to cause scale, the control unit 33 applies a high voltage to each of the electrode pairs 49. Consequently, it is possible to improve a removal effect for scale components in the electrolysis device 41. On the other hand, in the case of the quality of water that has low hardness and does not tend to cause scale, the control unit 33 applies a voltage lower than the above to each of the electrode pairs 49. Consequently, it is possible to reduce power consumption.

When the sensor 95 is the temperature sensor, the control unit 33 controls the power supply 51 to apply a high voltage to each of the electrode pairs 49 when water temperature detected by the sensor 95 is higher than a predetermined value set in advance. On the other hand, the control unit 33 controls the power supply 51 to apply a voltage lower than the above to each of the electrode pairs 49 when water temperature detected by the sensor 95 is equal to or lower than the predetermined value. Consequently, it is possible to reduce power consumption.

The power supply 51 may be controlled on the basis of, for example, set temperature of the water heater 11 rather than being controlled on the basis of water temperature detected by the sensor 95 as explained above. For example, in the water heater 11, the temperature of water heated by the water heat exchanger 21 is set to, for example, high temperature of 85°C to 90°C in winter. The temperature of water heated by the water heat exchanger 21 is set to, for example, relatively low temperature of about 60°C in summer. The control unit 33 controls the power supply 51 to apply a voltage to each of the electrode pairs 49 in the electrolysis device 41 in winter when the set temperature is high. In summer, the control unit 33 controls the power supply 51 to not apply a voltage to each of the electrode pairs 49 or such that an applied voltage is lower than the applied voltage in winter.

As explained above, in the embodiment, since the plurality of electrode pairs 49 are disposed in the container 47, it is possible to improve the removal efficiency for scale components compared with the conventional electrolysis device 41 in which one electrode pair 49 is set in the electrolytic cell. The plurality of electrode plates 53 are arrayed spaced apart from one another in the thickness direction. Water flowing from the inlet into the container 47 reaches the outlet after passing between the pair of electrode plates 53 in each of the electrode pairs 49. By adopting such a configuration, it is possible to increase a contact area of the electrodes and water while suppressing a volume occupied by the plurality of electrode pairs 49.

the embodiment, one of the inlet and the outlet for water is provided on one side in the array direction D of the plurality of electrode plates 53. The other of the inlet and the outlet for water is provided on the other side in the array direction of the plurality of electrode plates 53. Since the inlet and the outlet are provided on the one side and the other side in the array direction D, it is easy to supply water to all the plurality of electrode pairs 49. Therefore, it is possible to further improve the removal efficiency for scale components.

In the first embodiment, water flowing from the inlet provided in the first wall 471 into the container 47 flows to the second wall 472 side along the third wall 473 through a gap between one end portion of each of the electrode plates 53 and the third wall 473. A part of the water flowing along the third wall 473 flows into between the electrode plates of each of the electrode pairs 49 arranged in the array direction D. The water flowing along the electrode plates 53 between the electrode plates of each of the electrode pairs 49 merges on the fourth wall 474 side and flows out to the outside of the container 47 from the second flow port 45.

In this modification of the first embodiment, each of the electrode plates 53 is arranged to incline such that the one end portion 53a is located on one side in the array direction D than the other end portion 53b. Since each of the electrode plates 53 is arranged to incline as explained above, the water channel F formed by the plurality of electrode plates 53 also inclines in a direction substantially the same as the inclining direction of the electrode plate 53. An inflow direction in which water flows from the one end portion 53a side into the water channel F inclines to form an acute angle with a flowing direction in which the water flowing from the inlet the container 47 flows to the second wall 472 side along the third wall 473. Therefore, the water flowing from the inlet provided in the first wall 471 into the container 47 and flowing to the second wall 472 side along the third wall 473 through the gap between the one end portion 53a of each of the electrode plates 53 and the third wall 473 easily flows into between the electrode plates of each of the electrode pairs 49 arranged in the array direction D.

In the second embodiment, the first electrode plates 531 and the second electrode plates 532 are alternately arranged along the array direction D and the water channel F has the serpentine flow path. Water flowing from the inlet into the container 47 flows along the serpentine flow path to thereby pass between the pair of electrode plates 53 in each of the electrode pairs 49 in order. Consequently, it is possible to uniformly supply the water flowing from the inlet into the container 47 to all the plural electrode pairs 49. Therefore, it is possible to further improve the removal efficiency for scale components.

In the embodiments, the electrolysis device 41 is provided in the feed channel 27. In the feed channel 27, the flow velocity of water is low and fluctuation in the flow velocity is small. Therefore, the flow velocity of water passing through the electrolysis device 41 is generally fixed at a low flow velocity. Consequently, in the electrolysis device 41, it is possible to stably obtain an effective removal effect for scale components. Since electrolysis is performed during the operation of the heat pump, it is possible to use night-time electric power and reduce electricity charges.

In the embodiment, a voltage is applied to each of the electrode pairs 49 when the temperature of water is equal to or higher than a value set in advance at which scale tends to occur. Otherwise, a voltage is not applied and power consumption can be reduced.

In the embodiment, a voltage applied to each of the electrode pairs 49 is adjusted according to water quality such as the hardness of water. Therefore, it is possible to apply a voltage necessary for the water quality. Consequently, it is possible to suppress application of an excess voltage and reduce power consumption while improving the removal efficiency for scale components.

In the embodiment, water having passed through the electrolysis device 41 can be caused to flow into the electrolysis device 41 again through a re-inflow channel. Therefore, it is possible to further improve the removal efficiency for scale components while suppressing the size of the electrolysis device 41 from increasing.

In the embodiment, since the inlet and the outlet are reversed by the reversing mechanism, in the container 47, it is possible to reduce a concentration difference of scale components (a difference in the electrical conductivity of water) that occurs between the region on the inlet side and the region on the outlet side. Consequently, in the container 47, a difference in electrolysis efficiency between the region on the inlet side and the region on the outlet side decreases. Therefore, it is possible to improve electrolysis efficiency in the entire electrolysis device 41. It is also possible to maintain or improve the removal efficiency for scale components while suppressing total power consumption. Further, it is possible to reduce, among the plurality of electrode plates, fluctuation in an amount of scale adhering to the electrode plate 53. Consequently, it is possible to suppress scale from being precipitated only on a specific electrode plate 53. Therefore, for example, it is possible to extend a period of the operation for inverting the polarity explained above. Further, it is also possible to perform operation for only cleaning of the cathode while omitting the inverting operation for the polarity.

In the specific embodiments explained above, inventions including configurations explained below are mainly included.

An electrolysis device according to the present invention is used in a water heater including a water heat exchanger for heating water. The electrolysis device includes a container, a plurality of electrode pairs, and a power supply. The container includes a first flow port functioning as one of an inlet and an outlet for water, and a second flow port functioning as the other of the inlet and the outlet for water. The plurality of electrode pairs are disposed in the container. The power supply applies a voltage to each of the electrode pairs. Each of the electrode pairs includes a pair of electrode plates. A plurality of the electrode plates are arrayed spaced apart from one another in the thickness direction of the electrode plate. In the electrolysis device, a water channel is formed by the plurality of electrode plates such that water flowing from the inlet into the container reaches the outlet after passing between the pair of electrode plates in each of the electrode pairs.

In this configuration, since the plurality of electrode pairs are disposed in the container, it is possible to improve removal efficiency for scale components compared with the conventional electrolysis device in which one electrode pair is set in an electrolytic cell. Each of the electrode pairs includes a pair of electrode plates. Therefore, the plurality of electrode pairs are configured by a plurality of electrode plates. The plurality of electrode plates are arrayed spaced apart from one another in the thickness direction. Water flowing from the inlet into the container reaches the outlet after passing between the pair of electrode plates in each of the electrode pairs. By adopting such a configuration, it is possible to increase a contact area of the electrodes and water while suppressing a volume occupied by the plurality of electrode pairs.

In the electrolysis device, it is preferable that the container includes a first wall located on one side in an array direction of the plurality of electrode plates, a second wall located on the other side in the array direction and opposed to the first wall across the plurality of electrode plates, and a sidewall that extends along the array direction to surround the plurality of electrode plates and connects the first wall and the second wall. In this case, it is preferable that the first flow port is provided in the first wall or in the vicinity of the first wall, and the second flow port is provided in the second wall or in the vicinity of the second wall.

In this configuration, one of the inlet and the outlet for water is provided on the one side in the array direction of the plurality of electrode plates and the other of the inlet and the outlet for water is provided on the other side in the array direction of the plurality of electrode plates. Since the inlet and the outlet are provided on the one side and the other side in the array direction, it is easy to supply water to all the plurality of electrode pairs. Therefore, it is possible to further improve the removal efficiency for scale components.

Preferred arrangement examples of the plurality of electrode plates include a configuration explained below. In the electrolysis device, it is preferable that the sidewall includes a third wall extending along the array direction, and a fourth wall extending along the array direction and opposed to the third wall across the plurality of electrode plates, the plurality of electrode plates include first electrode plates connected to one pole of the power supply and second electrode plates connected to the other pole of the power supply, each of the first electrode plates is extended from a proximal end portion of the first electrode plate located in the third wall toward the fourth wall, and each of the second electrode plates is extended from a proximal end portion of the second electrode plate located in the fourth wall toward the third wall. In this case, it is preferable that the first electrode plates and the second electrode plates are arranged orthogonal to each other along the array direction, whereby the water channel includes a serpentine flow path.

In this configuration, the first electrode plates and the second electrode plates are alternately arranged along the array direction and the water channel includes the serpentine flow path. Water flowing from the inlet into the container flows along the serpentine flow path to thereby pass between the pair of electrode plates in each of the electrode pairs in order from the electrode pair on the inlet side. Consequently, it is possible to supply the water flowing from the inlet into the container to all of the plurality of electrode pairs. Therefore, it is possible to further improve the removal efficiency for scale components.

Another arrangement example of the plurality of electrode plates includes a configuration explained below. For example, in the electrolysis apparatus, the sidewall includes a third wall extending along the array direction, and a fourth wall extending along the array direction and opposed to the third wall across the plurality of electrode plates. A gap through which the water can pass is provided between one end portion of each of the electrode plates and the third wall. A gap through which the water can pass is provided between the other end portion of each of the electrode plates and the fourth wall. The first flow port is provided in the first wall in a position closer to the third wall than the fourth wall. The second flow port is provided in the second wall in a position closer to the fourth wall than the third wall.

In this configuration, an example is explained in which the first flow port functions as the inlet and the second flow port functions as the outlet. The water flowing from the inlet into the container flows out from the outlet roughly through a path explained below. That is, the water flowing from the inlet provided in the first wall into the container flows to the second wall side along the third wall through the gap between the one end portion of each of the electrode plates and the third wall. A part of the water flowing along the third wall flows into between the electrode plates of each of the electrode pairs arranged in the array direction. The water flowing along the electrode plates between electrode plates of each of the electrode pairs merges on the fourth wall side, flows to the second wall side along the fourth wall, and ows out to the outside of the container from the second flow port.

In the electrolysis device, it is preferable that each of the electrode plates are arranged to incline such that the one end portion is located on the one side in the array direction than the other end portion.

In this configuration, since each of the electrode plates are arranged to incline as explained above, the water channel formed by the plurality of electrode plates inclines in a direction substantially the same as the inclining direction of the electrode pair. For example, when a flow of water is explained with reference to an example in which the first flow port functions as the inlet, the water flows as explained below. That is, the inflow direction in which the water flows from the one end portion side into between the electrode plates of each of the electrode pairs (the water channel) inclines to form an acute angle with a flowing direction in which the water flowing into the container flows to the second wall side along the third wall. Therefore, the water flowing to the second wall side along the third wall easily flows into between the electrode plates of each of the electrode pairs arranged in the array direction.

Incidentally, in a heat-pump-type water heater, heated water (hot water) of which is used by a user, rather than the cooling water circulating apparatus of the circulation type for circulating water as cooling water as in Patent Document 1, water containing scale components is periodically filled from a water supply source such as tap water or well water to a tank. Therefore, in the case of the heat-pump-type water heater, compared with the cooling water circulating apparatus of the circulation type, it is necessary to efficiently remove scale components. In particular, when underground water such as well water is used as the water supply source, scale tends to be precipitated.

Therefore, a heat-pump-type water heater according to the present invention includes a heat pump unit which includes a water heat exchanger for heating water, and in which a refrigerant circulates through a refrigerant pipe, a hot water storage unit including a tank in which the water is stored, a feed channel for feeding the water in the tank to the water heat exchanger, and a return channel for returning the water heated by the water heat exchanger to the tank, a water supply pipe for supplying the water from a water supply source to the tank, a hot water supply pipe for supplying high-temperature water stored in the tank, and the electrolysis device for removing scale components contained in the water.

In this configuration, the electrolysis device that can improve the removal efficiency for scale components compared with the conventional electrolysis device is provided. Therefore, even in the heat-pump-type water heater, it is possible to effectively suppress scale from being precipitated in the water heat exchanger.

Further, in the heat-pump-type water heater, it is preferable that the electrolysis device is provided in the feed channel.

In this configuration, the electrolysis device is provided in the feed channel. Since the flow velocity of the water is low in the feed channel and fluctuation in the flow velocity is small, the flow velocity of water passing through the electrolysis device is generally fixed at a low flow velocity. Consequently, in the electrolysis device, it is possible to stably obtain an effective removal effect for scale components. Since electrolysis is performed during the operation of the heat pump, it is possible to use night-time electric power and reduce electricity charges.

It is preferably that the heat-pump-type water heater further includes a control unit configured to control the power supply for the electrolysis device. In this case, it is preferable that the control unit controls the power supply such that a voltage is applied to each of the electrode pairs when the temperature of water heated by the water heat exchanger is equal to or higher than a value set in advance.

In this configuration, a voltage is applied to each of the electrode pairs when the temperature of water is equal to or higher than the value set in advance. Otherwise, a voltage is not applied and power consumption can be reduced.

It is preferable that the heat-pump-type water heater further includes a control unit configured to control the power supply for the electrolysis device. In this case, it is preferable that the control unit controls the power supply to adjust a voltage applied to each of the electrode pairs according to water quality in the hot water storage unit.

this configuration, the voltage applied to each of the electrode pairs is adjusted according to water quality such as the hardness of water. Therefore, it is possible to apply a voltage necessary for the water quality. Consequently, it is possible to suppress application of an excessive voltage and reduce power consumption while improving the removal efficiency for scale components.

In the heat-pump-type water heater, it is preferable that the feed channel includes a re-inflow channel for returning water having passed through the electrolysis device to the upstream side of the electrolysis device and causing the water to flow into the electrolysis device again.

In this configuration, it is possible to cause the water having passed through the electrolysis device to flow into the electrolysis device again through the re-inflow channel. Therefore, it is possible to further improve the removal efficiency for scale components while suppressing the size of the electrolysis device from increasing.

It is preferable that the heat-pump-type water heater further includes a reversing mechanism for reversing the inlet and the outlet in the electrolysis device.

In a process in which the water flows from the upstream side to the downstream side in the container of the electrolysis device, scale components contained in the water are gradually removed. Therefore, the concentration of an electrolyte is lower in a region on the downstream side than in a region on the upstream side. Therefore, the removal efficiency for scale components tends to be lower in the region on the downstream side than in the region on the upstream side. In this configuration, the inlet and the outlet are reversed by the mechanism, whereby it is possible to reduce a concentration difference in scale components (a difference in the electrical conductivity of water) that occurs between the region on the inlet side and the region on the outlet side in the container. Consequently, in the container, a difference in electrolysis efficiency between the region on the inlet side and the region on the outlet side decreases. Therefore, it is possible to improve electrolysis efficiency in the entire electrolysis device. It is also possible to maintain or improve the removal efficiency for scale components while suppressing total power consumption. Further, it is possible to reduce, among the plurality of electrode plates, fluctuation in an amount of scale adhering to the electrode plate. Consequently, it is possible to suppress scale from being precipitated only on a specific electrode plate.

It is preferable that the electrolysis device is used in the one-through type heat-pump-type water heater. In the one-through type water heater, since hot water supplied from the hot water supply pipe is not returned to the tank, water of substantially the same amount as an amount of water discharged from the tank through the hot water supply pipe is supplied from the water supply source to the tank through the water supply pipe. Therefore, it is necessary to efficiently remove the scale components compared with the cooling water circulating apparatus of the circulation type or the water heater of the circulation type. Since the electrolysis device is excellent in removal efficiency for scale components, the electrolysis device is suitable for the one-through heat-pump-type water heater as well.

The present invention is not limited to the embodiments, and various modifications, improvements, and the like are possible without departing from the spirit of the present invention. For example, in the form illustrated in the embodiment, the first flow port is provided in the first wall and the second flow port is provided in the second wall. However, the present invention is not limited to this. The first flow port 43 may be provided in the vicinity of the first wall 471, and the second flow port 45 may be provided in the vicinity of the second wall 472. Specifically, for example, the first flow port 43 may be provided in the third wall 473 in the vicinity of the first wall 471, and the second flow port 45 may be provided in the fourth wall 474 in the vicinity of the second wall 472.

In the embodiment, the characteristics of the modifications shown in Figs. 9 to 13 are explained with reference to, as the example, the second embodiment including the serpentine flow path. However, for example, the characteristic components in the modifications shown in Figs. 9 to 13 may be added to the electrolysis device 41 according to the first embodiment shown in Fig. 2.

Each of the electrode plates may be formed in a mesh shape in which plurality of small through-holes are formed or may be formed in a bar shape. When the electrode plate has the bar shape, a shorter one of dimensions in two directions orthogonal on a cross section perpendicular to the longitudinal direction of the electrode plate is set as thickness and a longer one of the dimensions is set as width.

The embodiment is mainly explained with reference to, as the example, the case in which the first flow port functions as the inlet and the second flow port functions as the outlet. However, the first flow port may be the outlet and the second flow port may be the inlet.

The embodiment is explained with reference to, as the example, the case in which the electrolysis device 41 is provided in the inflow water pipe 27 on the downstream side than the pump 31 in the water heater 11 as shown in Fig. 1. However, the present invention is not limited to this. The electrolysis device 41 may be provided in the inflow water pipe 27 on the upstream side than the pump 31 or may be provided in the water supply pipe 37 for supplying water from the water supply source to the tank 15.

The embodiment is explained with reference to, as the example, the case in which the container 47 has the substantially rectangular parallelepiped shape. However, the present invention is not limited to this. The container 47 may be formed in a prism shape other than a rectangular parallelepiped or may be a columnar shape.

In the embodiments, the one-through type water heater is explained as the example. However, the present invention is not limited to this.

### Explanation of Reference Numerals

- 11: water heater
- 13: heat pump unit
- 15: tank
- 17: hot water storage unit
- 21: water heat exchanger
- 27: inflow water pipe (an example of a feed channel)
- 27a: bypass pipe
- 27b: re-inflow pipe (an example of a re-inflow channel)
- 29: outflow hot water pipe (an example of a return channel)
- 31: pump
- 33: control unit
- 35: hot water supply pipe
- 37: water supply pipe
- 41: electrolysis device
- 43: first flow port
- 45: second flow Port
- 47: container
- 471: first wall
- 472: second wall
- 473: third wall
- 474: fourth wall
- 48: sidewall
- 49: electrode pairs
- 51: power supplies
- 53: electrode plates
- 531: first electrode plates
- 532: second electrode plates
- D: array direction of a plurality of electrode plates
- F: water channel

## Claims

1. An electrolysis device used in a water heater including a water heat exchanger (21) for heating water, the electrolysis device comprising:
a container (47) including a first flow port (43) functioning as one of an inlet and an outlet for water, and a second flow port (45) functioning as the other of the inlet and the outlet for water;
a plurality of electrode pairs (49) disposed in the container (47); and
a power supply (51) configured to apply a voltage to each of the electrode pairs (49),
wherein
each of the electrode pairs (49) includes a pair of electrode plates (53),
a plurality of the electrode plates (53) are arrayed spaced apart from one another in a thickness direction of the electrode plate (53), and
a water channel (F) is formed by the plurality of electrode plates (53) such that water flowing from the inlet into the container (47) reaches the outlet after passing between the pair of electrode plates (53) in each of the electrode pairs (49).

2. The electrolysis device according to claim 1, wherein
the container (47) includes:
a first wall (471) located on one side in an array direction (D) of the plurality of electrode plates (53);
a second wall (472) located on the other side in the array direction (D) and opposed to the first wall (471) across the plurality of electrode plates (53); and
a sidewall (48) that extends along the array direction (D) to surround the plurality of electrode plates (53) and connects the first wall (471) and the second wall (472), and
the first flow port (43) is provided in the first wall (471) or in the vicinity of the first wall (471), and the second flow port (45) is provided in the second wall (472) or in the vicinity of the second wall (472).

3. The electrolysis device according to claim 2, wherein
the sidewall (48) includes a third wall (473) extending along the array direction (D), and a fourth wall (474) extending along the array direction (D) and opposed to the third wall (473) across the plurality of electrode plates (53),
the plurality of electrode plates (53) include first electrode plates (531) connected to one pole of the power supply (51) and second electrode plates (532) connected to the other pole of the power supply (51),
each of the first electrode plates (531) is extended from a proximal end portion of the first electrode plate located in the third wall (473) toward the fourth wall (474),
each of the second electrode plates (532) is extended from a proximal end portion of the second electrode plate located in the fourth wall (474) toward the third wall (473), and
the first electrode plates (531) and the second electrode plates (532) are alternately arranged along the array direction (D), whereby the water channel (F) includes a serpentine flow path.

4. The electrolysis device according to claim 2, wherein
the sidewall (48) includes a third wall (473) extending along the array direction (D), and a fourth wall (474) extending along the array direction (D) and opposed to the third wall(473) across the plurality of electrode plates (53),
a gap through which the water can pass is provided between one end portion of each of the electrode plates (53) and the third wall (473), and a gap through which the water can pass is provided between the other end portion of each of the electrode plates (53) and the fourth wall (474), and
the first flow port (43) is provided in the first wall (471) in a position closer to the third wall (473) than the fourth wall (474), and the second flow port (45) is provided in the second wall (472) in a position closer to the fourth wall (474) than the third wall (473).

5. The electrolysis device according to claim 4, wherein each of the electrode plates (53) are arranged to incline such that the one end portion is located on the one side in the array direction (D) than the other end portion.

6. A heat-pump-type water heater comprising:
a heat pump unit (13) which includes a water heat exchanger (21) for heating water, and in which a refrigerant circulates through a refrigerant pipe;
a hot water storage unit (17) including a tank (15) in which the water is stored, a feed channel (27) for feeding the water in the tank (15) to the water heat exchanger (21), and a return channel (29) for returning the water heated by the water heat exchanger (21) to the tank (15);
a water supply pipe (37) for supplying the water from a water supply source to the tank (15);
a hot water supply pipe (35) for supplying high-temperature water stored in the tank (15); and
the electrolysis device (41) according to any one of claims 1 to 5 for removing scale components contained in the water.

7. The heat-pump-type water heater according to claim 6, wherein the electrolysis device (41) is provided in the feed channel (27).

8. The heat-pump-type water heater according to claim 6 or 7, further comprising a control unit configured to control the power supply (51) for the electrolysis device (41), wherein
the control unit controls the power supply (51) such that a voltage is applied to each of the electrode pairs (49) when temperature of water heated by the water heat exchanger (21) is equal to or higher than a value set in advance.

9. The heat-pump-type water heater according to any one of claims 6 to 8, further comprising a control unit configured to control the power supply (51) for the electrolysis device (41), wherein
the control unit controls the power supply (51) to adjust a voltage applied to each of the electrode pairs (49) according to water quality in the hot water storage unit (17).

10. The heat-pump-type water heater according to any one of claims 6 to 9, further comprising a re-inflow channel for returning water having passed through the electrolysis device (41) to an upstream side of the electrolysis device (41) and causing the water to flow into the electrolysis device (41) again.

11. The heat-pump-type water heater according to any one of claims 6 to 10, further comprising a reversing mechanism for changing the inlet and the outlet in the electrolysis device (41).

12. The heat-pump-type water heater according to any one of claims 6 to 11, wherein the heat-pump-type water heater is of one-through type that does not return, to the tank (15), hot water supplied from the hot water supply pipe (35).
